# EUROPEAN PATENT APPLICATION

(11) **EP 4 793 596 A1**
(43) Date of publication of application: **19.08.2026**
(21) Application number: 25158215.1
(22) Date of filing: 17.02.2025
(51) Int. Cl.: G01C 15/00

(54) **POSITIONING OF A MINING VEHICLE WITH REPEATED SCANNING**

(71) Applicant: Sandvik Mining and Construction Oy, 33330 Tampere (FI)
(72) Inventor: KUKKONEN, Sami, 33330 TAMPERE (FI); TAIPALE, Juha, 33330 TAMPERE (FI)
(74) Representative: Sandvik

(57) **Abstract**

A method may comprise: obtaining information about positions of targets detected by a scanning device; determining whether a spatial configuration of a first subset of the targets corresponds to a predetermined spatial configuration of targets mounted to a surface of the mine; determining whether a spatial configuration of a second subset of the targets corresponds to a predetermined spatial configuration of targets of the mining vehicle; causing the scanning device to repeat the scanning operation until identifying the first and second subsets of targets; determining a position of the mining vehicle in the coordinate frame of the mine based on the positions of the first subset of the targets in the coordinate frame of the mine and positions of the second subset of the targets relative to the scanning device.

## Description

### TECHNICAL FIELD

Various example embodiments generally relate to the field of mining. Some example embodiments relate to positioning of a mining vehicle with repeated scanning operation to detect positioning targets.

### BACKGROUND

In various fields of technology, such as for example rock drilling or mining applications in general, it may be desired to monitor the position of mining vehicles, such as drill rigs, loaders and dumpers. Scanning devices such as tachymeters and cameras may be used to scan the environment, for example a mining tunnel, in order to recognize objects in the environment. A tachymeter is a surveying instrument that may be used to measure distances and angles quickly and accurately, for example by means of a laser signal reflected from a target such as a prism. A total station may use electromagnetic waves for a similar purpose.

### SUMMARY

The claimed invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for positioning of a mining vehicle is disclosed. The apparatus may comprise: at least one processor; and at least one memory including computer program code, the at least one memory and the computer program code configured to, with the at least one processor, cause the apparatus at least to: obtain information about positions of targets detected by a scanning device by at least one scanning operation, wherein the positions of the targets are relative to the scanning device; determine whether a spatial configuration of a first subset of the targets corresponds to a predetermined spatial configuration of targets mounted to a surface of the mine; determine whether a spatial configuration of a second subset of the targets corresponds to a predetermined spatial configuration of targets of the mining vehicle; cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; obtain information about positions of the identified first subset of the targets in a coordinate frame of the mine; and determine a position of the mining vehicle in the coordinate frame of the mine based on the positions of the first subset of the targets in the coordinate frame of the mine and positions of the second subset of the targets relative to the scanning device.

According to a second aspect, a mining vehicle is disclosed. The mining vehicle may comprise: at least one processor; and at least one memory including computer program code, the at least one memory and the computer program code configured to, with the at least one processor, cause the mining vehicle at least to: obtain information about positions of targets detected by a scanning device by at least one scanning operation, wherein the positions of the targets are relative to the scanning device; determine whether a spatial configuration of a first subset of the targets corresponds to a predetermined spatial configuration of targets mounted to a surface of the mine; determine whether a spatial configuration of a second subset of the targets corresponds to a predetermined spatial configuration of targets of the mining vehicle; cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; obtain information about positions of the identified first subset of the targets in a coordinate frame of the mine; and determine a position of the mining vehicle in the coordinate frame of the mine based on the positions of the first subset of the targets in the coordinate frame of the mine and positions of the second subset of the targets relative to the scanning device.

According to a third aspect, a method for positioning of mining vehicle is disclosed. The method may comprise: obtaining information about positions of targets detected by a scanning device by at least one scanning operation, wherein the positions of the targets are relative to the scanning device; determining whether a spatial configuration of a first subset of the targets corresponds to a predetermined spatial configuration of targets mounted to a surface of the mine; determining whether a spatial configuration of a second subset of the targets corresponds to a predetermined spatial configuration of targets of the mining vehicle; causing the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identifying the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; obtaining information about positions of the identified first subset of the targets in a coordinate frame of the mine; and determining a position of the mining vehicle in the coordinate frame of the mine based on the positions of the first subset of the targets in the coordinate frame of the mine and positions of the second subset of the targets relative to the scanning device.

According to a fourth aspect, an apparatus for positioning a mining vehicle is disclosed. The apparatus may comprise: means for obtaining information about positions of targets detected by a scanning device by at least one scanning operation, wherein the positions of the targets are relative to the scanning device; means for determining whether a spatial configuration of a first subset of the targets corresponds to a predetermined spatial configuration of targets mounted to a surface of the mine; means for determining whether a spatial configuration of a second subset of the targets corresponds to a predetermined spatial configuration of targets of the mining vehicle; means for causing the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; means for identifying the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; means for obtaining information about positions of the identified first subset of the targets in a coordinate frame of the mine; and means for determining a position of the mining vehicle in the coordinate frame of the mine based on the positions of the first subset of the targets in the coordinate frame of the mine and positions of the second subset of the targets relative to the scanning device.

According to a fifth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: obtain information about positions of targets detected by a scanning device by at least one scanning operation, wherein the positions of the targets are relative to the scanning device; determine whether a spatial configuration of a first subset of the targets corresponds to a predetermined spatial configuration of targets mounted to a surface of the mine; determine whether a spatial configuration of a second subset of the targets corresponds to a predetermined spatial configuration of targets of the mining vehicle; cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; obtain information about positions of the identified first subset of the targets in a coordinate frame of the mine; and determine a position of the mining vehicle in the coordinate frame of the mine based on the positions of the first subset of the targets in the coordinate frame of the mine and positions of the second subset of the targets relative to the scanning device.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining vehicle;
FIG. 2 illustrates an example of a scanning device configured for scanning targets mounted on a tunnel surface or a mining vehicle;
FIG. 3 illustrates an example of scanning targets distributed in a mining tunnel, a scanning device, and a mining vehicle;
FIG. 4 illustrates an example of erroneous detection of a target due to a reflection from a puddle;
FIG. 5 illustrates an example of avoiding erroneous detection of a target;
FIG. 6 illustrates an example of correcting erroneous detection of a target by repeating scanning in opposite direction;
FIG. 7 illustrates an example of a flow chart for positioning of a mining vehicle based on repeated scanning operation;
FIG. 8 illustrates an example of an apparatus configured to practise one or more example embodiments; and
FIG. 9 illustrates an example of a method for positioning of a mining vehicle.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

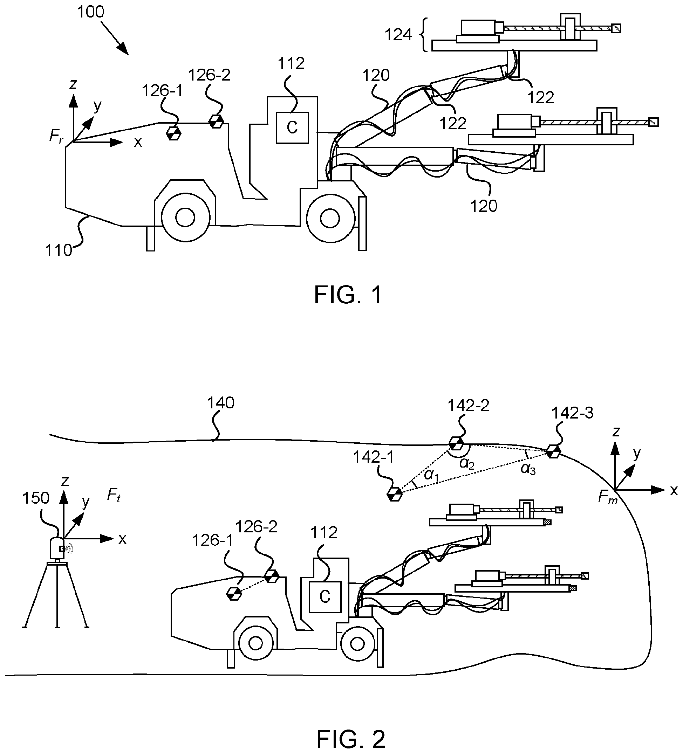

FIG. 1 illustrates an example of a mining vehicle. Even though underground drill rig 100 is provided as an example of the mining vehicle, it is understood that example embodiments of the present disclosure may be also applied to other type of mining vehicles, such as for example, mining trucks, loaders, dumpers, bolter machines, or multitaskers.

Underground drill rig 100 may be an automated mining vehicle. An automated mining vehicle may be equipped with tools configured for certain task(s), for example drilling. An automated mining vehicle operating in an automatic mode may be configured to, for example, receive a task to be performed, perceive the environment of the automated mining vehicle and autonomously perform the task while taking the environment into account. An automated mining vehicle operating in an automatic mode may be configured to operate independently but may be taken under external control by a human operator at certain operation areas or conditions, such as during states of emergencies. Example embodiments of the present disclosure may be however applied also in non-autonomous, semi-autonomous (e.g., remote-controlled) mining vehicles, or manually operated mining vehicles.

Underground drill rig 100 may comprise movable carrier 110 and boom(s) 120 connected thereto. Movable carrier 110 may comprise equipment for moving or stabilising underground drill rig 100, such as for example a motor, wheels, or stabilizer jacks (e.g., ground support). Movable carrier 110 may be configured to move autonomously or it may be configured to be controlled by a human operator, either remotely or locally at underground drill rig 100. Even though two booms 120 have been illustrated in FIG. 1, underground drill rig 100 may generally comprise one or a plurality (e.g., two, three, four,...) of booms 120. Boom(s) 120 may comprise a plurality of boom parts coupled to each other, movable carrier 110, and/or drilling unit 124 by joint(s) 122. Controllable joints 122 enable drilling unit 124 to be placed at a desired position and orientation with respect to tunnel surface 140 (see FIG. 2). Underground drill rig 100 may comprise one or more of the parts described above, or other tool(s) or equipment relevant for a drill rig.

Drilling unit 124 may comprise a feeding system configured to keep the drill bit of drilling unit 124 in contact with the drilling face, in this example tunnel surface 140, and to enable a drill rod to move along a feed beam during drilling. In general, drilling unit 124 may be movable relative to underground drill rig 100, e.g., movable relative to movable carrier 110. This provides the benefit of enabling holes to be drilled at different positions of tunnel surface 140 without moving movable carrier 110.

Drilling unit 124 may be configured to drill holes at tunnel surface 140, for example at planned hole position(s). The planned hole position(s) may be defined in a drilling plan, which may be preconfigured at underground drill rig 100 or delivered to underground drill rig 100 over a communication interface. Tunnel surface 140 may comprise the roof, floor, or wall(s) of the tunnel, or any portion(s) thereof. Alternatively, a drill rig could be configured to drill a surface outside a tunnel, for example in an opencast mine.

Underground drill rig 100 may comprise scanning targets, also simply referred to as targets, for a scanning device such as a tachymeter, camera, or a total station navigation device such as a total station theodolite. A target may be for example a prism (e.g., reflective prism), which may be configured to reflect a laser signal emitted by a tachymeter. Underground drill rig 100 may for example comprise a pair of prisms 126-1, 126-2 or in general a group of prisms (e.g., three, four, or five prisms). The prisms may be provided at predefined positions of underground drill rig 100, for example at the coordinate frame of underground drill rig 100 (*F*ᵣ). The coordinate frame of underground drill rig 100 may be stationary with respect to underground drill rig 100. A total station or total station theodolite may comprise an electronic or optical device configured to detect angles and distance from the total station navigation device to a target, for example based on reflection of a modulated infrared carrier signal from the target. Position of an unknown target relative to a known position can be determined using the total station if there is a direct line of sight between the device and the targe, for example using trigonometry and triangulation.

Underground drill rig 100 may comprise computing device 112, which may be configured to determine the position of underground drill rig 100, and optionally to control various other operations of underground drill rig 100

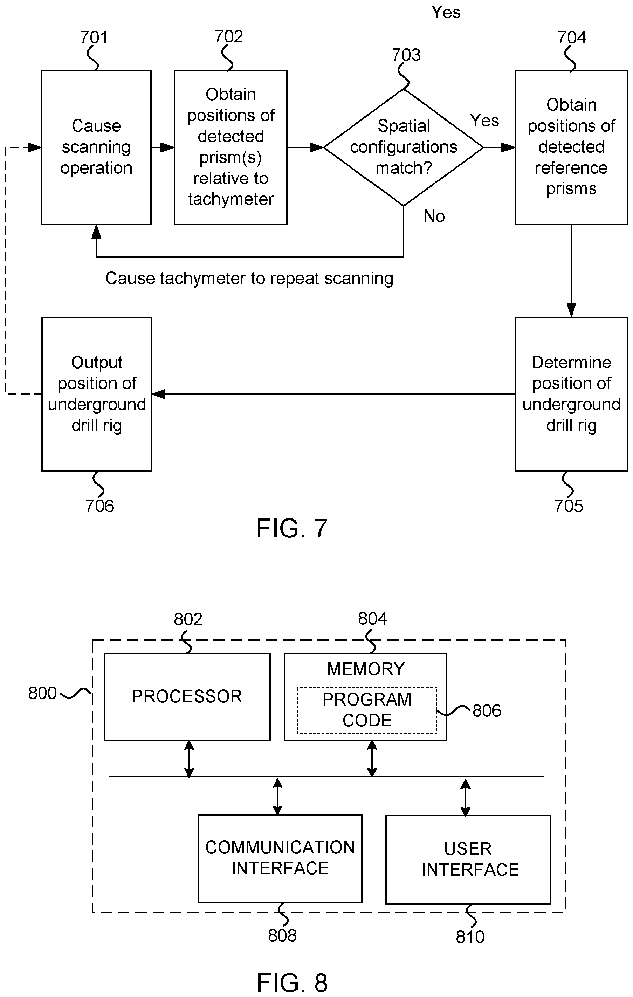

Computing device 112 may be provided as a software application residing on a memory and being executable by a processor. An example of an apparatus suitable for implementing computing device 112 is provided in FIG. 8. Computing device 112 may comprise, or be communicatively coupled to, various functions, blocks, or applications for implementing functionality of computing device 112. For example, computing device 112 may comprise or be communicatively coupled to a data management server, which may be configured to store information on data related to positioning of underground drill rig 100, such as for example positions of reference prisms 142 in a coordinate frame of the mine, as will be further described with reference to FIG. 2.

FIG. 2 illustrates an example of a tachymeter configured for scanning targets mounted on a tunnel and an underground drill rig. Reference prisms 142-1, 142-2, 142-3, together referred to as reference prisms 142, may be provided within the mine, for example at or near tunnel surface 140 (e.g., mounted to a surface of the mine such as at the roof or wall(s) of the tunnel). Reference prisms 142 may be provided at known positions within the mine. For example, their positions in the coordinate frame of the mine *F*ₘ may be recorded upon their instalment. Reference prisms 142 are used throughout the description to generally represent reference targets for a scanning device. Reference targets may comprise targets mounted on a surface of the mine, e.g., tunnel surface 140.

Tachymeter 150, which may be also called a tacheometer and which is throughout this disclosure used to generally represent a scanning device, may be mounted on the floor of a mine, e.g., on a stand such as a tripod, or installed on tunnel surface 140. Tachymeter 150 may comprise a laser tachymeter, for example a laser tracker, and it may be used to measure distances and/or angles to a target such as any of prisms 126, 142. Tachymeter 150 may be configured to emit a laser beam towards a target and to measure the time it takes for the laser to reflect from a prism 126, 142 back to tachymeter 150. A laser beam may comprise a sector (e.g., vertical sector of for example 40 degrees) of emitted light. Width of the vertical sector may define the reach of the beam in the vertical direction, e.g., how low or up the beam of tachymeter 150 is directed. A laser beam may comprise a laser ray.

Tachymeter 150 may be configured to calculate the distance to the target based on the reflected light using the knowledge of the speed of light. Tachymeter 150 may be also configured to measure angle(s) towards a target, for example in both horizontal and vertical planes, for example using internal sensor(s) of tachymeter 150 that are configured to track the orientation of the laser beam. Tachymeter 150 may be configured to determine the position of the target with respect to tachymeter 150, e.g., in a coordinate frame of tachymeter 150 (*F*ₜ). Tachymeter 150 may be configured to scan its environment, for example by sweeping the laser beam horizontally and/or vertically. For example, when sweeping horizontally (e.g., from left to right), a vertical sector covered by the beam may be swept horizontally from left to right.

Reference prisms 142 may be provided at a certain spatial configuration with respect to each other, such as for example at a particular distance from each other and/or at particular relative height levels. In case of a group of more than two prisms the spatial configuration may comprise geometric shape such as a two-dimensional geometric shape (e.g., a polygon such as a triangle) or a three-dimensional geometric shape such as a polyhedron (e.g., a tetrahedron), defined by the positions of the prisms, for example as corner points of the respective geometrical shape. The same applies to prisms 126 of underground drill rig 100. A prism is used throughout the description to generally represent a target for a scanning device. A spatial configuration of targets may generally comprise information about relative positions of the targets, e.g., positions of a set of targets with respect to each other.

Tachymeter 150 may be placed or installed at the tunnel by a human operator. It is noted that tachymeter 150 may be provided at any suitable position, which might not be any predetermined or known position, as the position of tachymeter 150 may be determined based on detecting reference prisms 142, if needed.

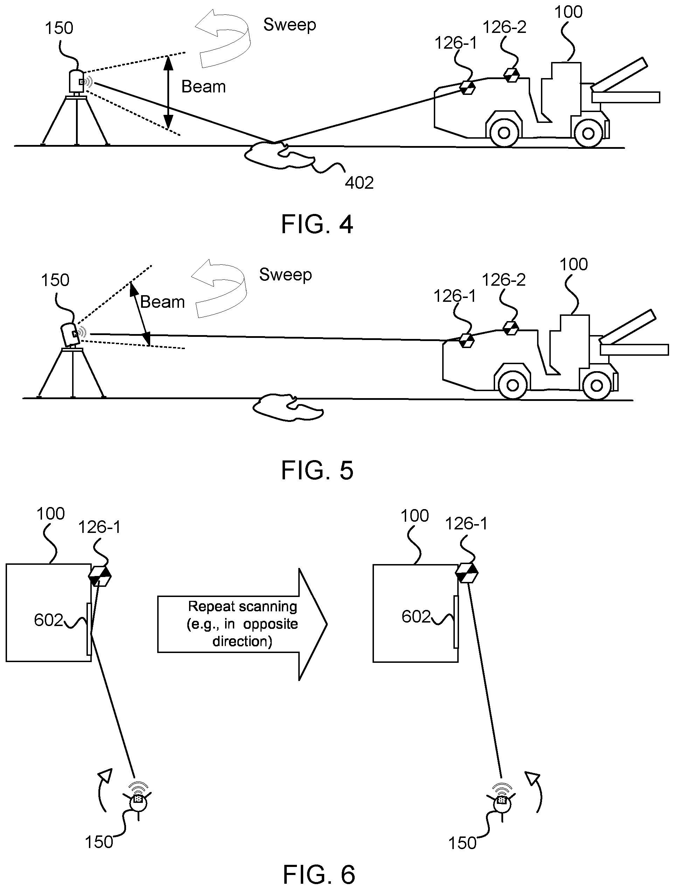

Due to relative position of tachymeter 150 and underground drill rig 100 there can be horizontal reflections of a target such as a reflection from the side window of underground drill rig 100, resulting in faulty measurement coordinates. A horizontal reflection may comprise a reflection which causes the horizontal direction of the beam to change, for example from a substantially vertically oriented object such as the side window of underground drill rig 100. Due to such a reflection, tachymeter 150 might erroneously detect the position of 126-1 to be in the direction of side window 602 (cf., FIG. 6). In this case, computing device 112 may be configured to ignore the measured coordinates when identifying (e.g., categorizing) the target and an extra scanning round may be executed to opposite direction to find the target without the side reflection, if not enough targets were found after a first scanning round. Computing device 112 may be configured to ignore a detected target, in response to determining that the position of the detected target does not match a predetermined spatial configuration of a subset of prisms identified based on other detected prisms. Another possibility is that the laser beam of tachymeter 150 is reflected from a puddle if the puddle and the tachymeter are in line with target(s) of underground drill rig 100 or the tunnel. In this case also, the resulting measurement may be distorted and ignored when categorizing the target by computing device 112. To tackle this issue, computing device 112 may be configured to cause extra scanning rounds to be executed, for example with first upper and then lower sector tilting, if not enough targets were found with first full round.

According to an example embodiment, a method may comprise: obtaining information about positions of targets detected by a scanning device; determining whether a spatial configuration of a first subset of the targets corresponds to a predetermined spatial configuration of targets mounted to a surface of the mine; determining whether a spatial configuration of a second subset of the targets corresponds to a predetermined spatial configuration of targets of the mining vehicle; causing the scanning device to repeat the scanning operation until identifying the first and second subsets of targets; determining a position of the mining vehicle in the coordinate frame of the mine based on the positions of the first subset of the targets in the coordinate frame of the mine and positions of the second subset of the targets relative to the scanning device.

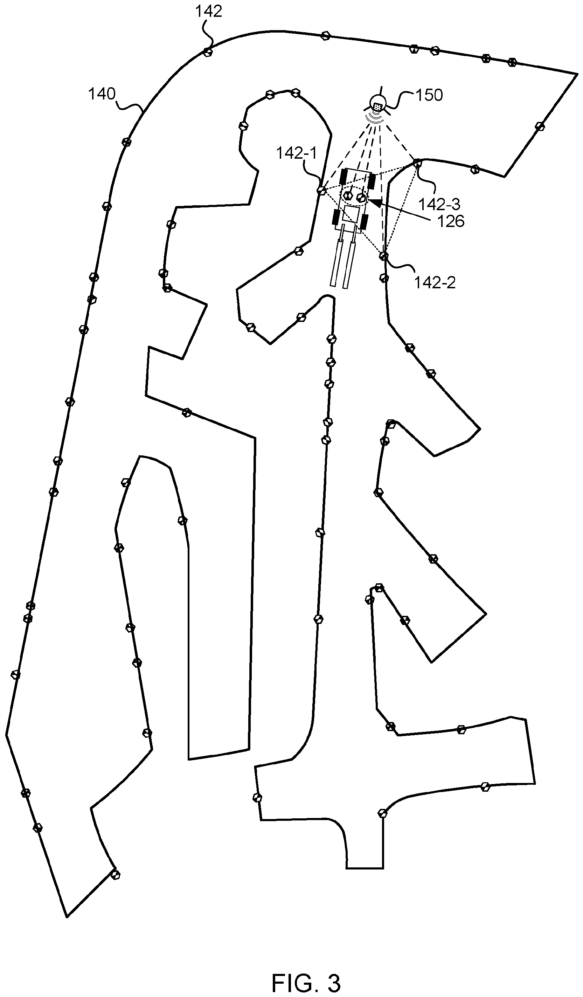

FIG. 3 illustrates an example of scanning targets distributed in a mining tunnel, a scanning device, and a mining vehicle. Reference prisms 142, representing again scanning targets in general, may be provided within the mine, for example mounted to a surface of the mine such as tunnel surface 140. Reference prisms 142 may be provided at positions resembling a random distribution such that spatial geometry of a subset of reference prisms 142 is unique within the set of reference prisms provided at the mine. An enlargement of prisms detected by tachymeter is provided in FIG. 5.

FIGs. 4 to 6 illustrate examples of erroneous and correct detections of a target. As illustrated in FIG. 4, tachymeter 150 may sweep a beam (e.g., a vertical sector of laser light) horizontally from right to left. When doing so, prism 126-1 may be detected via puddle 402, causing tachymeter 150 to erroneously detect prism 126-1 in the direction of puddle 402. By contrast, in FIG. 5 tachymeter 150 has lifted the beam upwards, thereby avoiding the erroneous detection due to the reflection.

In FIG. 6, tachymeter 150 may detect prism 126-1 prism via window 602 of underground drill rig 100, causing tachymeter 150 to erroneously detect prism 126-1 in the direction of window 602. By contrast, in FIG. 6 tachymeter 150 sweeps in an opposite direction (right to left) and prism 126-1 is detected at its correct position. Functionality and further examples for avoiding erroneous detection of prisms 126, 142 will be further described with reference to FIG. 7.

FIG. 7 illustrates an example of a flow chart for positioning of a mining vehicle. Operations of the flow chart may be performed by an apparatus, such as for example computing device 112, which may be provided at a mining vehicle or in some example embodiments external to the mining vehicle to be positioned. Even though the operations have been described using tachymeter 150, prisms 126, 142, and underground drill rig 100 as examples, it is understood that similar operations may be performed for any scanning device, any type of targets, and any type of mining vehicle.

At operation 701, computing device 112 may be configured to cause tachymeter 150 to perform a scanning operation, for example sweep(s) of tachymeter 150. A sweep of tachymeter 150 may comprise a linear (e.g., horizontal) sweep, for example from left to right, or vice versa. Computing device 112 may be configured to cause tachymeter 150 to perform the scanning operation by transmitting a scanning command to tachymeter 150. Alternatively, tachymeter 150 might be configured to perform the scanning autonomously without any instructions from computing device 112. In case of a stereo camera as the scanning device, the scanning operation may comprise capturing, e.g., substantially simultaneously, a single pair of images, from which computing device 112 may be configured to detect prisms and determine their direction and distance from the stereo camera, for example by an image processor.

At operation 702, computing device 112 may be configured to obtain information about positions of the prisms detected by the scanning operation(s), for example by receiving this information from tachymeter 150 (e.g., via a wireless connection such as Bluetooth^{™} connection). As the positions were detected by tachymeter 150, the detected positions may be presented relative to the position of tachymeter 150, e.g., in the coordinate frame of tachymeter 150 (*F*ₜ). The coordinate frame of tachymeter 150 may be stationary with respect to tachymeter 150. In general, a coordinate frame of an object may be stationary with respect to that object.

At operation 703, computing device 112 may be configured to determine whether spatial configurations of the detected prisms match any predetermined spatial configuration of reference prisms 142 or prisms 126 of underground drill rig 100. For example, computing device 112 may be configured to determine whether a spatial configuration of a first subset of the detected prisms corresponds to a predetermined spatial configuration of reference prisms 142 mounted to tunnel surface 140. Computing device 112 may be also configured to determine whether a spatial configuration of a second subset the detected prisms corresponds to a predetermined spatial configuration of prisms 126 of underground drill rig 100. Computing device 112 may be for example configured compare parameters of a detected spatial configuration (e.g., angle(s) α₁, α₂, and/or α₃ or relative height levels of the positions) to a predetermined spatial configuration of reference prisms 142 or prisms 126 of underground drill rig 100, in order to determine whether there is a match or not. Computing device 112 may be configured to cause tachymeter 150 to repeat the scanning operation, in response to determining that the spatial configuration of the first subset of the detected prisms does not correspond to the predetermined spatial configuration of reference targets provided within the mine (e.g., mounted to a surface of the mine) and that the spatial configuration of the second subset of the detected prisms does not correspond to the predetermined spatial configuration of prisms 126 of underground drill rig 100. In other words, computing device 112 may be configured to cause tachymeter 150 to repeat the scanning operation, possibly multiple times, until determining that the spatial configuration of the first subset corresponds to the predetermined spatial configuration of reference prisms 142 and that the spatial configuration of the second subset corresponds to the predetermined spatial configuration of prisms 126 of underground drill rig 100. The scanning may be repeated until a match has been found for both types of prisms.

Computing device 112 may be further configured to identify the first subset of prisms and the second subset of prisms based on the spatial configurations of the first subset and the second subset corresponding to the predetermined spatial configuration of reference prisms 142 and the predetermined spatial configuration of prisms 126 of underground drill rig 100, respectively. Computing device 112 may be configured to identify a first subset of the prisms based on determining that the first subset of the prisms has a spatial configuration (e.g. a geometric shape) corresponding to a predetermined spatial configuration of reference prisms 142. For example, computing device 112 may be configured to compare parameters of the detected spatial configuration (e.g., angle(s) α₁, α₂, and/or α₃ or relative height levels of the positions) to a predetermined spatial configuration of reference prisms 142. Similarly, computing device 112 may be configured to identify a second subset of the prisms based on determining that the second subset of the prisms has a spatial configuration corresponding to a predetermined spatial configuration of prisms 126 of underground drill rig 100.

In both cases, the predetermined spatial configuration may comprise a predetermined distance between a pair of prisms, predetermined parameters of a geometric shape such as a polygon or polyhedron defined by a respective group of prisms, or at least one predetermined relative height level of the pair of targets or the group of the targets. Considering the spatial configuration when identifying prisms of the mine and underground drill rig 100 enables to distinguish these different types of prisms even though they would be detected by a single scanning operation. Computing device may be configured to identify the first and second subsets based on a single scanning operation, e.g., single sweep of tachymeter 150 or a single pair of images captured by a stereo camera. The identification may be therefore based on prisms detected by a single scanning operation, even if the scanning were repeated. Repeating the scanning in order to detect different types of prisms may be therefore avoided, which makes positioning of underground drill rig 100 faster. Alternatively, computing device 112 may be configured to identify the first and second subsets of prisms based on prisms detected during different repetitions of the scanning. This provides the benefit of increasing the probability of finding matches to the predetermined spatial configurations of reference prisms 142 and prisms 126 of underground drill rig 100. Computing device 112 may be for example configured to ignore position(s) of prisms detected during a single repetition of the scanning operation, if the position(s) do not match with the predetermined spatial configuration(s).

Repeating the scanning may comprise performing the scanning again but in a slightly different way such that the probability of correctly detecting prisms 126, 142 is increased. For example, computing device 112 may be configured to cause tachymeter 150 to repeat scanning such that the beam of tachymeter 150 is raised to a higher level (e.g., directed higher) than during a previous sweep (e.g., an initial sweep), for example in response to determining that the identification of the first subset of targets or the second subset of targets is based on less than a predetermined number of prisms. For example, computing device may be configured to cause the scanning to be repeated if identification of a subset of reference prisms 142 is based on less than three detected prisms. This provides the benefit of improving reliability of positioning.

As another example, computing device 112 may be configured to cause tachymeter 150 to repeat scanning such that the beam of tachymeter 150 is lowered to a lower level (e.g., directed lower) than during a previous sweep (e.g., an initial sweep), for example if the identification of the first subset of prisms or the second subset of prisms is based on less than a predetermined number of targets.

As another example, computing device 112 may be configured to cause tachymeter 150 to repeat scanning such that the sweep of tachymeter 150 is repeated in an opposite direction compared to the direction during the previous sweep (e.g., an initial sweep), for example if the identification of the first subset of prisms or the second subset of prisms is based on less than a predetermined number of prisms. Repeating the scanning in an opposite direction provides the benefit of finding some prisms in their correct positions before detecting them in wrong positions, for example due to reflections from a window (cf. FIG. 6)

As another example, computing device 112 may be configured to cause tachymeter 150 to repeat scanning in an opposite direction compared to a previous sweep (e.g., an initial sweep). The beam of tachymeter 150 may be also raised to a higher level than during the previous sweep. These operations may be performed for example if the identification of the first subset of prisms or the second subset of prisms is based on less than a predetermined number of prisms. Raising the beam provides the benefit of avoiding erroneous detection of prisms due to reflections from the ground, e.g., a puddle as illustrated in FIG. 4 and FIG. 5.

As another example, computing device 112 may be configured to cause tachymeter 150 to repeat scanning in an opposite direction compared to that of a previous sweep (e.g., an initial sweep) such that the beam of tachymeter 150 is lowered to a lower level than during the previous sweep. These operations may be performed for example if the identification of the first subset of prisms or the second subset of prisms is based on less than a predetermined number of prisms. This provides the benefit of finding also prisms located near the ground, even if initially performing the scanning on a higher level to avoid reflections from the ground.

Hence, repeating the scanning in a different direction, for example as described by means of the above examples, provides the benefit of increasing the likelihood of being able to correctly detect and subsequently identify groups of prisms. Reliability of positioning mining vehicles may be therefore improved.

At operation 704, computing device 112 may be configured to obtain information about positions of reference prisms 142 (cf., first subset of targets) in the coordinate frame of the mine (*F*ₘ). Computing device 112 may be configured to identify, e.g., determine identifiers of the first subset of prisms, based on their spatial configuration matching certain set of known reference prisms. Computing device 112 may be configured to retrieve the information about the positions of the first subset of prisms (e.g., 142-1, 142-2, 142-3) in the coordinate frame of the mine from a data source, such as for example a look-up table comprising indications of the positions of the identified first subset of prisms. The look-up table may be preconfigured at a memory of computing device 112 or computing device 112 may be configured to receive the look-up table from another device, e.g., the data management server.

At operation 705, computing device 112 may be configured to determine the position of underground drill rig 100 in the coordinate frame of the mine (*F*ₘ).

As a first example, computing device 112 may be configured to determine a transformation (e.g. a transformation matrix) from a coordinate frame of tachymeter 150 (*F*ₜ), e.g., positions defined relative to tachymeter 150, to the coordinate frame of the mine. Computing device 112 may be configured to determine the transformation based on known positions of the reference prisms 142 in the coordinate frame of the mine and their positions as detected by tachymeter 150 (e.g., positions relative to tachymeter 150). Computing device 112 may be configured to determine the position of underground drill rig in the coordinate frame of the mine based on applying the transformation to the positions of prisms 126 of underground drill rig 100 (cf. second set of targets). Any suitable transform may be used. For example, when positions of the detected reference prisms have been matched with identified subset of reference prisms in the mine, an optimal rotation and translation may be calculated by computing device 112 between the subsets to obtain the transformation information needed. Hence, the transform may comprise optimal rotation and translation, for example utilizing the singular value decomposition (SVD) when describing the transform in a matrix format.

As another example, computing device 112 may be configured to first determine the position of tachymeter 150 and based on that determine the position of underground drill rig 100 in the coordinate frame of the mine.

Computing device 112 may be configured to determine the position of tachymeter 150 in the coordinate frame of the mine (*F*ₘ) based on the positions of reference prisms 142 (cf. a first subset of targets) in the coordinate frame of the mine and positions of reference prisms 142 relative to tachymeter 150. For example, computing device 112 may be configured to use the distances and angles from tachymeter 150 to reference prisms 142 and determine a position that corresponds to the detected angles and distances to the known positions of reference prisms 142. Computing device 112 may be configured to determine the position of underground drill rig 100 in the coordinate frame of the mine (*F*ₘ) based on determining a position that corresponds to the distances and angles to prisms 126 of underground drill rig 100, as detected by tachymeter 150, using the determined position of tachymeter 150 as reference.

At operation 706, computing device 112 may be configured to output the position of underground drill rig 100 in the coordinate frame of the mine (*F*ₘ). Computing device 112 may be for example configured to cause the position to be transmitted to another device, e.g., an external server, or an internal application of underground drill rig 100 (e.g., a navigation application). Alternatively, or additionally, computing device 112 may be configured to control operation of underground drill rig 100 based on the determined position, for example control navigation or movement of underground drill rig 100 in the mine, performance of an operation such as dumping of loading of material, or the like.

Even though illustrated in a particular order, operations of FIG. 7 may be performed in any suitable order and at least partly in parallel, where appropriate. For example, operation 703 might be performed while continuing to obtain positions of further prism(s) as detected by tachymeter 150 (operation 702). Computing device 112 may be configured to move from execution of operation 706 back to operation 701 to cause subsequent scanning operation(s), for example after a predetermined time in order to perform positioning of underground drill rig 100 again. Alternatively, the procedure may be ended.

FIG. 8 illustrates an example of an apparatus configured to practise one or more example embodiments. Apparatus 800 may be or comprise a mining vehicle control apparatus, such as for example computing device 112, the mining vehicle itself, or a device external to the mining vehicle. In some example embodiments, a mining vehicle such as underground drill rig 100 may comprise apparatus 800. Although apparatus 800 is illustrated as a single device, it is appreciated that, wherever applicable, functions of apparatus 800 may be distributed to a plurality of devices.

Apparatus 800 may comprise at least one processor 802. The at least one processor 802 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), programmable logic controller (PLC), a hardware accelerator, a special-purpose computer chip, or the like.

Apparatus 800 may further comprise at least one memory 804. The at least one memory 804 may be configured to store, for example, computer program code or the like, for example operating system software and application software. The at least one memory 804 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 804 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 804 may be also embodied separate from apparatus 800, for example as a computer readable (storage) medium, examples of which include memory sticks, compact discs (CD), or the like.

When apparatus 800 is configured to implement some functionality, some component and/or components of apparatus 800, such as for example the at least one processor 802 and/or the at least one memory 804, may be configured to implement this functionality. Furthermore, when the at least one processor 802 is configured to implement some functionality, this functionality may be implemented using program code 806 comprised, for example, in the at least one memory 804.

The functionality described herein may be performed, at least in part, by one or more computer program product components such as software components. According to an example embodiment, apparatus 800 comprises a processor or processor circuitry, such as for example a microcontroller, configured by program code 806, when executed, to execute the embodiments of the operations and functionality described herein. Program code 806 is provided as an example of instructions which, when executed by the at least one processor 802, cause performance of apparatus 800.

For example, computing device 112 may be at least partially implemented as program code configured to cause apparatus 800 to perform functionality of computing device 112. Similarly, transmission or reception of data, e.g., data, instruction(s), signal(s), or command(s), over an internal or external communication interface of a mining vehicle may be controlled by software.

Alternatively, or in addition, the functionality described herein can be performed, at least in part, by one or more hardware logic components. For example, and without limitation, illustrative types of hardware logic components that can be used include field-programmable gate arrays (FPGA), application-specific integrated circuits (ASIC), application-specific standard products (ASSP), system-on-a-chip systems (SOC), complex programmable logic devices (CPLD), graphics processing units (GPU), neural processing units (NPU), tensor processing units (TPU), or the like. Computing device 112 may comprise control circuitry, for example any of the above hardware logic components or a combination of at least one processor and least one memory, for implementing functionality described herein.

Apparatus 800 may comprise a communication interface 808 configured to enable apparatus 800 to transmit and/or receive information. Communication interface 808 may comprise an internal or external communication interface, such as for example a radio interface between a mining vehicle and a scanning device or an external server, or an internal control bus within a mining vehicle. Apparatus 800 may further comprise other components and/or functions such as for example user interface 810 comprising at least one input device and/or at least one output device. The input device may take various forms such as a keyboard, a touch screen, or one or more embedded control buttons, joysticks, or other type of manual controllers. The output device may for example comprise a display, a speaker, or the like. User interface 810 may be configured to enable a human operator to monitor or control various functions of the mining vehicle.

Apparatus 800 may be configured to perform or cause performance of any aspect of the method(s) described herein. Further, a computer program or a computer program product may comprise instructions for causing, when executed by apparatus 800, apparatus 800 to perform any aspect of the method(s) described herein. Further, apparatus 800 may comprise means for performing any aspect of the method(s) described herein. In one example, the means comprises the at least one processor 802, the at least one memory 804 including program code 806 (instructions) configured to, when executed by the at least one processor 802, cause apparatus 800 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 802. Apparatus 800 may comprise means for transmitting or receiving information, for example one or more wired or wireless (e.g., radio) transmitters or receivers, which may be coupled or be configured to be coupled to one or more antennas, or transmitter(s) or receiver(s) of a wired communication interface.

According to a first aspect, an apparatus for positioning of a mining vehicle is disclosed. The apparatus may comprise: at least one processor; and at least one memory including computer program code, the at least one memory and the computer program code configured to, with the at least one processor, cause the apparatus at least to: obtain information about positions of targets detected by a scanning device by at least one scanning operation, wherein the positions of the targets are relative to the scanning device; determine whether a spatial configuration of a first subset of the targets corresponds to a predetermined spatial configuration of targets mounted to a surface of the mine; determine whether a spatial configuration of a second subset of the targets corresponds to a predetermined spatial configuration of targets of the mining vehicle; cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; obtain information about positions of the identified first subset of the targets in a coordinate frame of the mine; determine a position of the mining vehicle in the coordinate frame of the mine based on the positions of the first subset of the targets in the coordinate frame of the mine and positions of the second subset of the targets relative to the scanning device.

According to an example embodiment of the first aspect, the computer program code is further configured to, with the at least one processor, cause the apparatus to: cause the scanning device to repeat the scanning operation in a different direction than an initial sweep of the scanning device, in response to determining that the spatial configuration of the first subset of the targets does not correspond to the predetermined spatial configuration of targets mounted to the surface of the mine or that the spatial configuration of the second subset of the targets does not correspond to the predetermined spatial configuration of targets of the mining vehicle.

According to an example embodiment of the first aspect, the scanning operation by the scanning device is repeated such that the beam of the scanning device is raised to a higher level than during the initial sweep, if the identification of the first subset of targets or the second subset of targets is based on less than a predetermined number of targets.

According to an example embodiment of the first aspect, the scanning operation by the scanning device is repeated such that the beam of the scanning device is lowered to a lower level than during the initial sweep if the identification of the first subset of targets or the second subset of targets is based on less than a predetermined number of targets.

According to an example embodiment of the first aspect, the scanning operation by the scanning device is repeated such that the sweep of the scanning device is repeated in the opposite direction than during the initial sweep if the identification of the first subset of targets or the second subset of targets is based on less than a predetermined number of targets.

According to an example embodiment of the first aspect, the scanning operation by the scanning device is repeated in the opposite direction to that of the initial sweep such that the beam of the scanning device is raised to a higher level than during the initial sweep if the identification of the first subset of targets or the second subset of targets is based on less than a predetermined number of targets.

According to an example embodiment of the first aspect, the scanning operation by the scanning device is repeated in the opposite direction to that of the initial sweep such that the beam of the scanning device is lowered to a lower level than during the initial sweep if the identification of the first subset of targets or the second subset of targets is based on less than a predetermined number of targets.

According to an example embodiment of the first aspect, the scanning device comprises a tachymeter, and the at least one scanning operation comprises at least one sweep of the tachymeter.

According to an example embodiment of the first aspect the targets comprise a plurality of reflective prisms.

According to an example embodiment of the first aspect, the predetermined spatial configuration of the targets of the mining machine or the predetermined spatial configuration of targets mounted to the surface of the mine comprises at least one of: a predetermined distance between a pair of the targets, predetermined parameters of a polygon or polyhedron defined by a group of the targets, a predetermined relative height level of the pair of targets or the group of the targets.

According to an example embodiment of the first aspect, the computer program code is further configured to, with the at least one processor, cause the apparatus to: retrieve the information about the positions of the first subset of the targets in the coordinate frame of the mine from a look-up table comprising indications of the positions of the identified first subset of the targets

According to a second aspect, a mining machine is disclosed. The mining machine may comprise: at least one processor; and at least one memory including computer program code, the at least one memory and the computer program code configured to, with the at least one processor, cause the mining machine at least to: obtain information about positions of targets detected by a scanning device by at least one scanning operation, wherein the positions of the targets are relative to the scanning device; determine whether a spatial configuration of a first subset of the targets corresponds to a predetermined spatial configuration of targets mounted to a surface of the mine; determine whether a spatial configuration of a second subset of the targets corresponds to a predetermined spatial configuration of targets of the mining vehicle; cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle;. obtain information about positions of the identified first subset of the targets in a coordinate frame of the mine; determine a position of the mining vehicle in the coordinate frame of the mine based on the positions of the first subset of the targets in the coordinate frame of the mine and positions of the second subset of the targets relative to the scanning device. The computer program code may be further configured to, with the at least one processor, cause the mining machine to perform any example embodiment of the first aspect.

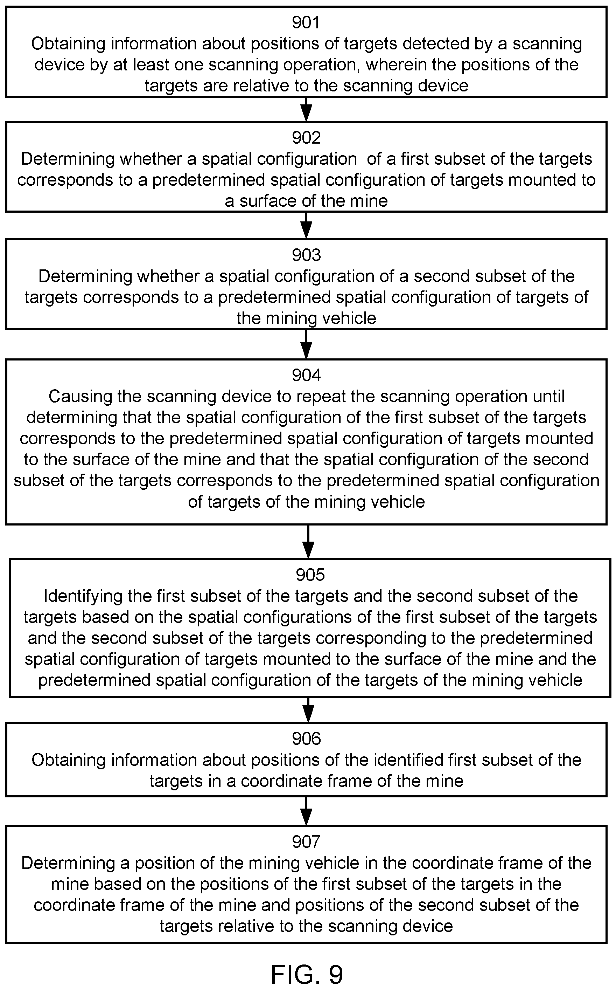

FIG. 9 illustrates an example of a method for positioning of a mining vehicle, according to a third aspect of the present disclosure. The method may comprise a computer-implemented method performed by, for example, apparatus 800 such as computing device 112.

At operation 901, the method may comprise obtaining information about positions of targets detected by a scanning device by at least one scanning operation, wherein the positions of the targets are relative to the scanning device.

At operation 902, the method may comprise determining whether a spatial configuration of a first subset of the targets corresponds to a predetermined spatial configuration of targets mounted to a surface of the mine.

At operation 903, the method may comprise determining whether a spatial configuration of a second subset of the targets corresponds to a predetermined spatial configuration of targets of the mining vehicle.

At operation 904, the method may comprise causing the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle.

At operation 905, the method may comprise identifying the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle.

At operation 906, the method may comprise obtaining information about positions of the identified first subset of the targets in a coordinate frame of the mine.

At operation 907, the method may comprise determining a position of the mining vehicle in the coordinate frame of the mine based on the positions of the first subset of the targets in the coordinate frame of the mine and positions of the second subset of the targets relative to the scanning device.

According to an example embodiment of the third aspect, the method comprises: causing the scanning device to repeat the scanning operation in a different direction than an initial sweep of the scanning device, in response to determining that the spatial configuration of the first subset of the targets does not correspond to the predetermined spatial configuration of targets mounted to the surface of the mine or that the spatial configuration of the second subset of the targets does not correspond to the predetermined spatial configuration of targets of the mining vehicle.

According to an example embodiment of the third aspect, the scanning operation by the scanning device is repeated such that the beam of the scanning device is raised to a higher level than during the initial sweep, if the identification of the first subset of targets or the second subset of targets is based on less than a predetermined number of targets.

According to an example embodiment of the third aspect, the scanning operation by the scanning device is repeated such that the beam of the scanning device is lowered to a lower level than during the initial sweep if the identification of the first subset of targets or the second subset of targets is based on less than a predetermined number of targets.

According to an example embodiment of the third aspect, the scanning operation by the scanning device is repeated such that the sweep of the scanning device is repeated in the opposite direction than during the initial sweep if the identification of the first subset of targets or the second subset of targets is based on less than a predetermined number of targets.

According to an example embodiment of the third aspect, the scanning operation by the scanning device is repeated in the opposite direction to that of the initial sweep such that the beam of the scanning device is raised to a higher level than during the initial sweep if the identification of the first subset of targets or the second subset of targets is based on less than a predetermined number of targets.

According to an example embodiment of the third aspect, the scanning operation by the scanning device is repeated in the opposite direction to that of the initial sweep such that the beam of the scanning device is lowered to a lower level than during the initial sweep if the identification of the first subset of targets or the second subset of targets is based on less than a predetermined number of targets.

According to an example embodiment of the third aspect, the scanning device comprises a tachymeter, and the at least one scanning operation comprises at least one sweep of the tachymeter.

According to an example embodiment of the third aspect the targets comprise a plurality of reflective prisms.

According to an example embodiment of the third aspect, the predetermined spatial configuration of the targets of the mining machine or the predetermined spatial configuration of reference targets mounted to the surface of the mine comprises at least one of: a predetermined distance between a pair of the targets, predetermined parameters of a polygon or polyhedron defined by a group of the targets, a predetermined relative height level of the pair of targets or the group of the targets.

According to an example embodiment of the third aspect, the method comprises: retrieving the information about the positions of the first subset of the targets in the coordinate frame of the mine from a look-up table comprising indications of the positions of the identified first subset of the targets.

According to a fourth aspect, an apparatus may comprise means for obtaining information about positions of targets detected by a scanning device by at least one scanning operation, wherein the positions of the targets are relative to the scanning device; means for determining whether a spatial configuration of a first subset of the targets corresponds to a predetermined spatial configuration of targets mounted to a surface of the mine; means for determining whether a spatial configuration of a second subset of the targets corresponds to a predetermined spatial configuration of targets of the mining vehicle; means for causing the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; means for identifying the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; means for obtaining information about positions of the identified first subset of the targets in a coordinate frame of the mine; and means for determining a position of the mining vehicle in the coordinate frame of the mine based on the positions of the first subset of the targets in the coordinate frame of the mine and positions of the second subset of the targets relative to the scanning device. The apparatus may comprise means for performing any example embodiment(s) of the method of the third aspect.

According to a fifth aspect, a computer program, a computer program product, or a (non-transitory) computer-readable medium may comprise program instructions which, when executed by an apparatus, cause the apparatus at least to: obtain information about positions of targets detected by a scanning device by at least one scanning operation, wherein the positions of the targets are relative to the scanning device; determine whether a spatial configuration of a first subset of the targets corresponds to a predetermined spatial configuration of targets mounted to a surface of the mine; determine whether a spatial configuration of a second subset of the targets corresponds to a predetermined spatial configuration of targets of the mining vehicle; cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle; identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle; obtain information about positions of the identified first subset of the targets in a coordinate frame of the mine; and determine a position of the mining vehicle in the coordinate frame of the mine based on the positions of the first subset of the targets in the coordinate frame of the mine and positions of the second subset of the targets relative to the scanning device. The computer program, the computer program product, or the (non-transitory) computer-readable medium may comprise program instructions which, when executed by an apparatus, cause the apparatus to perform any example embodiment(s) of the method of the third aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for positioning of a mining vehicle within a mine, the apparatus comprising:
at least one processor; and
at least one memory including computer program code, the at least one memory and the computer program code configured to, with the at least one processor, cause the apparatus at least to:
obtain information about positions of targets detected by a scanning device by at least one scanning operation, wherein the positions of the targets are relative to the scanning device;
determine whether a spatial configuration of a first subset of the targets corresponds to a predetermined spatial configuration of targets mounted to a surface of the mine;
determine whether a spatial configuration of a second subset of the targets corresponds to a predetermined spatial configuration of targets of the mining vehicle;
cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle;
identify the first subset of the targets and the second subset of the targets based on the spatial configurations of the first subset of the targets and the second subset of the targets corresponding to the predetermined spatial configuration of targets mounted to the surface of and the predetermined spatial configuration of the targets of the mining vehicle;
obtain information about positions of the identified first subset of the targets in a coordinate frame of the mine; and
determine a position of the mining vehicle in the coordinate frame of the mine based on the positions of the first subset of the targets in the coordinate frame of the mine and positions of the second subset of the targets relative to the scanning device.

2. The apparatus according to claim 1, wherein the computer program code is further configured to, with the at least one processor, cause the apparatus to:
cause the scanning device to repeat the scanning operation in a different direction than an initial sweep of the scanning device, in response to determining that the spatial configuration of the first subset of the targets does not correspond to the predetermined spatial configuration of targets mounted to the surface of the mine or that the spatial configuration of the second subset of the targets does not correspond to the predetermined spatial configuration of targets of the mining vehicle.

3. The apparatus according to claim 2, wherein the scanning operation by the scanning device is repeated such that the beam of the scanning device is raised to a higher level than during the initial sweep if the identification of the first subset of targets or the second subset of targets is based on less than a predetermined number of targets.

4. The apparatus according to claim 2, wherein the scanning operation by the scanning device is repeated such that the beam of the scanning device is lowered to a lower level than during the initial sweep if the identification of the first subset of targets or the second subset of targets is based on less than a predetermined number of targets.

5. The apparatus according to claim 2, wherein the scanning operation by the scanning device is repeated such that the sweep of the scanning device is repeated in the opposite direction than during the initial sweep if the identification of the first subset of targets or the second subset of targets is based on less than a predetermined number of targets.

6. The apparatus according to claim 2, wherein the scanning operation by the scanning device is repeated in the opposite direction to that of the initial sweep such that the beam of the scanning device is raised to a higher level than during the initial sweep if the identification of the first subset of targets or the second subset of targets is based on less than a predetermined number of targets.

7. The apparatus according to claim 2, wherein the scanning operation by the scanning device is repeated in the opposite direction to that of the initial sweep such that the beam of the scanning device is lowered to a lower level than during the initial sweep if the identification of the first subset of targets or the second subset of targets is based on less than a predetermined number of targets.

8. The apparatus according to any of claims 1-7, wherein the scanning device comprises a tachymeter, and wherein the at least one scanning operation comprises at least one sweep of the tachymeter.

9. The apparatus according to any of claims 1-8, wherein the targets comprise a plurality of reflective prisms.

10. The apparatus according to any of claims 1 - 9, wherein the predetermined spatial configuration of the targets of the mining machine or the predetermined spatial configuration of targets mounted to the surface of the mine comprises at least one of:
a predetermined distance between a pair of the targets,
predetermined parameters of a polygon or polyhedron defined by a group of the targets,
a predetermined relative height level of the pair of targets or the group of the targets.

11. The apparatus according to any of claims 1 to 10, wherein the computer program code is further configured to, with the at least one processor, cause the apparatus to:
retrieve the information about the positions of the first subset of the targets in the coordinate frame of the mine from a look-up table comprising indications of the positions of the identified first subset of the targets.

12. A mining vehicle comprising the apparatus according to any of claims 1 to 11.

13. A method for positioning of a mining vehicle within a mine, the method comprising:
obtaining information about positions of targets detected by a scanning device by at least one scanning operation, wherein the positions of the targets are relative to the scanning device;
determining whether a spatial configuration of a first subset of the targets corresponds to a predetermined spatial configuration of targets mounted to a surface of the mine;
determining whether a spatial configuration of a second subset of the targets corresponds to a predetermined spatial configuration of targets of the mining vehicle;
causing the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle;
identifying the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle;.
obtaining information about positions of the identified first subset of the targets in a coordinate frame of the mine; and
determining a position of the mining vehicle in the coordinate frame of the mine based on the positions of the first subset of the targets in the coordinate frame of the mine and positions of the second subset of the targets relative to the scanning device.

14. A computer program comprising program instructions which, when executed by an apparatus, cause the apparatus at least to:
obtain information about positions of targets detected by a scanning device by at least one scanning operation, wherein the positions of the targets are relative to the scanning device;
determine whether a spatial configuration of a first subset of the targets corresponds to a predetermined spatial configuration of targets mounted to a surface of the mine;
determine whether a spatial configuration of a second subset of the targets corresponds to a predetermined spatial configuration of targets of the mining vehicle;
cause the scanning device to repeat the scanning operation until determining that the spatial configuration of the first subset of the targets corresponds to the predetermined spatial configuration of targets mounted to the surface of the mine and that the spatial configuration of the second subset of the targets corresponds to the predetermined spatial configuration of targets of the mining vehicle;
identify the first subset of the targets and the second subset of the targets based on the spatial configurations of the first subset of the targets and the second subset of the targets corresponding to the predetermined spatial configuration of targets mounted to the surface of the mine and the predetermined spatial configuration of the targets of the mining vehicle;.
obtain information about positions of the identified first subset of the targets in a coordinate frame of the mine; and
determine a position of the mining vehicle in the coordinate frame of the mine based on the positions of the first subset of the targets in the coordinate frame of the mine and positions of the second subset of the targets relative to the scanning device.
